(19) **Europäisches Patentamt**
**European Patent Office**
**Office européen des brevets**

(11) **EP 1 733 190 B1**

(12) **EUROPEAN PATENT SPECIFICATION**

(45) Date of publication and mention
of the grant of the patent:
**06.08.2014 Bulletin 2014/32**

(51) Int Cl.:
***G01D 7/00*** (2006.01)

(21) Application number: **04803400.3**

(86) International application number:
**PCT/EP2004/013631**

(22) Date of filing: **01.12.2004**

(87) International publication number:
**WO 2005/054786 (16.06.2005 Gazette 2005/24)**

(54) **METHOD AND SYSTEM FOR PRESENTING INFORMATION**

VERFAHREN UND VORRICHTUNG ZUM VORFÜHREN VON INFORMATIONEN

PROCEDE ET SYSTEME DE PRESENTATION D'INFORMATIONS

(84) Designated Contracting States:
**AT BE BG CH CY CZ DE DK EE ES FI FR GB GR HU IE IS IT LI LT LU MC NL PL PT RO SE SI SK TR**

(30) Priority: **01.12.2003 PCT/EP03/13479**

(43) Date of publication of application:
**20.12.2006 Bulletin 2006/51**

(73) Proprietor: **VOLVO TECHNOLOGY CORPORATION**
**S-405 08 Göteborg (SE)**

(72) Inventors:
 • **VICTOR, Trent**
  **414 69 Göteborg (SE)**
 • **JARLENGRIP, Johan**
  **416 66 Göteborg (SE)**

(74) Representative: **Heun, Thomas et al**
**Rathausmarkt 5**
**20095 Hamburg (DE)**

(56) References cited:
 **EP-A- 0 846 588     US-A1- 2002 067 366**

 • PATENT ABSTRACTS OF JAPAN vol. 1996, no. 02, 29 February 1996 (1996-02-29) -& JP 07 280592 A (NISSAN MOTOR CO LTD), 27 October 1995 (1995-10-27)
 • PATENT ABSTRACTS OF JAPAN vol. 2003, no. 12, 5 December 2003 (2003-12-05) & JP 2003 341383 A (DENSO CORP), 3 December 2003 (2003-12-03)
 • PATENT ABSTRACTS OF JAPAN vol. 2003, no. 12, 5 December 2003 (2003-12-05) & JP 2003 291688 A (DENSO CORP), 15 October 2003 (2003-10-15)

**Description**

The invention relates to a method and system for presenting or reproducing information in a viewing especially of a driver of a vehicle, or a train, or a captain of a ship, or a pilot of an airplane or of any other person who has to gaze in a certain direction, especially for observing or monitoring the environment like for example a road in case of a vehicle driver.

It is generally known that for safely driving a vehicle the driver has to look predominantly onto the road for observing the traffic and avoiding accidents. However, especially drivers in current vehicles are often required to look away from the road and into the interior of the vehicle. For example, the driver frequently needs to directly fixate (look straight at) the speedometer, the radio or navigation displays and he must be able to read and understand the information presented there and to operate these and other devices, additionally to driving the vehicle and monitoring the traffic.

Any glances away from the road for example into the interior of the vehicle can potentially cause an unsafe driving situation because the driver's ability to detect changes in the on-road environment is reduced. Off-road glances lead to undesirable safety consequences such as increased variability of lane-keeping performance, lane exceedencies, increased brake reaction times, missed events and more.

SE 0201571-7 discloses a device for indicating an operational state of a vehicle comprising a display unit which shows graphical information in the form of an arc shaped scale extending from a first angle to a second angle and a number of numerals. The operational state is indicated by a first segment which extends from the first angle to a third variable angle and which assumes a state that is visually distinguishable from the second segment between the third and the second angle. Furthermore in order to increase the legibility of the operational state each numeral is arranged to be able to assume a first normal format and a second larger format, wherein the latter is activated in the area around the relevant operational state.

This device is provided to reduce the time for transmitting the information concerned, like for example the speed of a vehicle, while retaining the precision, whereby the driver is able to keep his attention directed towards the current driving situation to a greater extent.

JP 07-280592A discloses a meter device for a vehicle, wherein a display mode of the meter device can be altered between a peripheral vision mode and a central vision mode in response to a judgment of a driver's sight line being separated from the meter device or not.

A general object of this invention is to provide a method and system by which the above mentioned risks can be further reduced and the safety especially of driving a vehicle can be further increased.

Especially it is an object of the invention to provide a method and system for presenting or reproducing information in such a way that especially a person mentioned in the first paragraph who is operating a vehicle, airplane, ship or train, is less impaired with respect to his ability to detect changes in the environment, when reading such information.

It is another object of the invention to provide a method and system by which the number of glances away from the environment which has to be observed in order to read information by a person mentioned in the first paragraph is further reduced.

These objects are solved by a method according to claim 1 and a system according to claim 5.

The dependent claims disclose advantageous embodiments of the invention.

Further details, features and advantages of the invention are disclosed in the following description of preferred and exemplary embodiments of the invention with reference to the drawings in which shows:

Fig. 1    a diagram of the relative acuity of vision of a human eye;
Fig. 2    a representation of letters which are equally magnified with ten times stimuli threshold size; and
Fig. 3    a schematic view of a preferred embodiment of a system according to the invention.

According to the invention, especially a driver of a vehicle (or any other person mentioned in the introductory part of the description) is enabled to read or recognize information by peripheral vision when his gaze is not directed at, or close to, an in-vehicle display or head-up display. The information is presented by means of a display device in such a way that the driver's eye movements towards the information image (i. e. the presentation or reproduction of the information) and subsequent eye-fixations upon the information image are not necessary. The information is readable or recognizable without having to move the eyes off the road. The information is presented as simply and large enough to enable information extraction by peripheral vision.

In order to achieve this, the following considerations have to be made:

It is generally known that the visual acuity of a human eye is greatest at the gaze point a person is looking at (which is defined as the visual 0° direction or gaze direction) and an area which extends to about 3° around the gaze point (angle of eccentricity). This area of maximum of visual acuity is called foveal vision area or fovea. The area surrounding this foveal vision area is called peripheral vision area in which the visual acuity decreases with increasing angle from the visual 0° or gaze direction (or eccentricity). The area between 3° and 10° is also called the parafovea.

An approximation of this decrease or decline in visual acuity is given by the following equation (1) which is disclosed in: Findlay and Gilchrist: "Active Vision", Oxford 2003:

$$(1) \qquad\qquad V_e = V_f / (1 + E / E_s)$$

in which $V_e$ is the visual acuity at eccentricity E, $V_f$ is the visual acuity at the fovea and $E_s$ is a scaling constant (for grating acuity, the constant is approximately 2.5°).

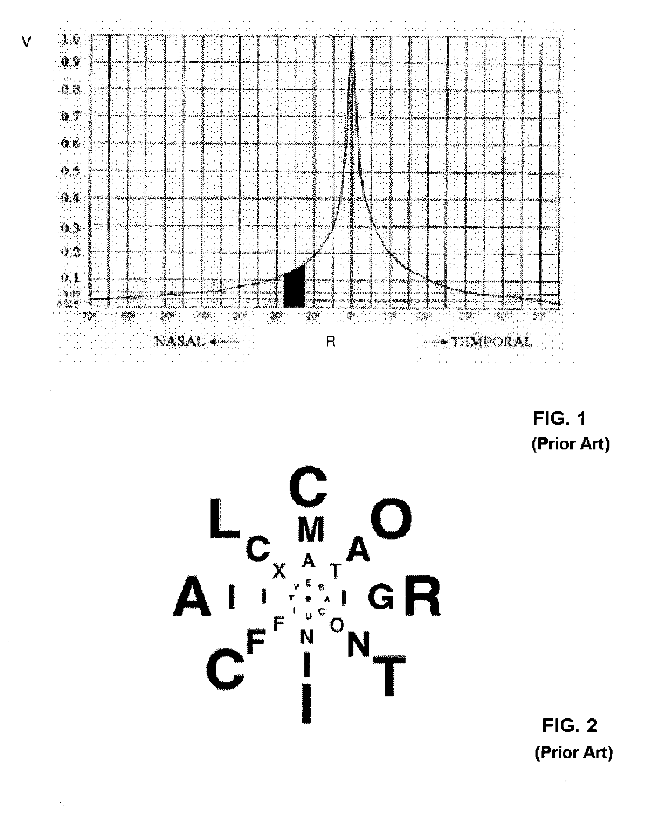

Figure 1 (taken out from Findlay and Gilchrist, see above) shows a diagram of this relative acuity V of vision (vertical axis) of a human eye in the nasal and temporal (i.e. to the temple) angular direction on the retina R in degree (horizontal axis) wherein 0° denotes the gaze direction. The blind spot on the retina is indicated by a black area.

Usually, information is presented to a driver in such a way (especially with respect to its magnitude and/or thickness of letters or symbols and/or complexity and volume of content) that he can recognize it only by his foveal vision but not by his peripheral vision. This has the consequence that every time the driver wants to read such information he has to direct his view away from the road and onto the display on which the information is presented or reproduced.

To be readable by peripheral vision when directing the gaze onto the road, the size of the information, like especially text and line size of the presented or reproduced information, have to be enlarged and simplified to compensate for the loss of visual acuity in peripheral vision. The amount of such enlargement and simplification increases according to Figure 1 in dependency on the angle of eccentricity in which the information is presented relative to the gaze direction. The rules for the enlargement and simplification of information can be determined by trial and error or from the above established knowledge of contingencies.

Simplifying equation (1) above, a regression line can be used as an alternative to determine this enlargement. A best fitting regression line for visual acuity loss has been found by Anstis (1974, mentioned in Findlay and Gilchrist, see above) to be the following equation (2):

$$(2) \qquad\qquad y = 0.046\,x - 0.031\,\mathrm{deg}$$

wherein y is the threshold letter height in degree at which the letter could just be recognized and x is the retinal eccentricity in degree.

Thus, for every degree of visual angle the minimum discriminable size increases by about 2.5 minutes of arc. Figure 2 shows such an equal magnification of letters on the basis of this equation (2) at ten times stimuli threshold size. If the viewer's gaze is directed on the central dot then the letters surrounding this dot are nearly equally "good" readable.

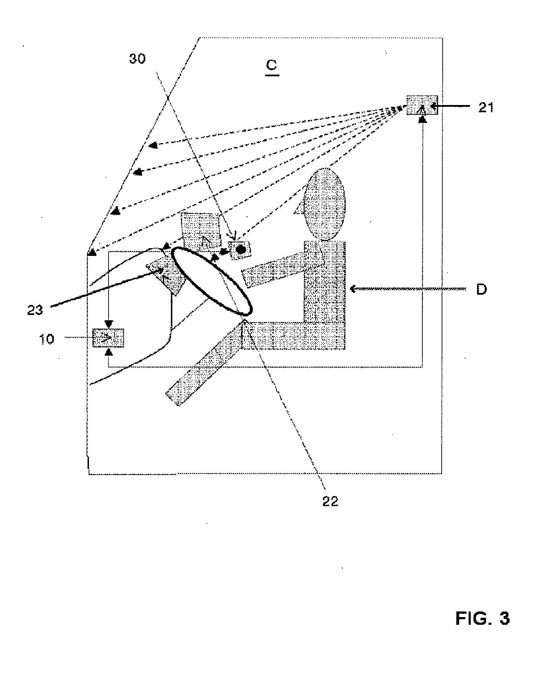

Figure 3 shows a side view into the cabin C of a vehicle with a driver D who is driving the vehicle and shows a preferred embodiment of a system for presenting or reproducing information according to the invention.

A main component of this system is a control device 10 for receiving information data to be displayed to the driver D and for processing these data so that at least one of the display devices 21, 22, 23 can be controlled for presenting or reproducing the information data to the driver D.

A first display device is for example a laser projector 21 which is provided and installed to project the information data for example onto a certain location of the windscreen of the vehicle or onto the dashboard. A second display device is for example a usual screen 22 installed at a dashboard, and a third display device is for example a head-down display 23 (or a head-up display) for presenting the information data to the driver.

The term "display device" is used in this disclosure to refer to any source of visual information presentation to the driver. Examples of displays include conventional computer displays, e.g. Liquid Crystal Displays (LCD) or similar, used to present GPS-based navigation and map information or other electronic devices, displays in the instrument panel, head-up displays, light emitting diodes (LEDs), and other projection displays. Helmet-mounted-, visor-mounted-, eyeglass-mounted displays can also be used.

An example of a projection display is a commercially available diode laser (see e.g. www.lasershow.se) which is capable of producing color picture stimuli. A picture stimulus is made up of a single laser beam which is moved around so quickly that the impression of an image is generated. The beam is controlled by two small electromagnetic motors (x-, and y-axis) with a small mirror on the motor axis. The use of a number of different lasers is advantageous, including a red and/or blue and/or green laser. However, in many applications it is sufficient to use a simple, inexpensive laser, such as those commonly used for as pointing devices for presentations in an auditorium; an automotive grade laser could be used as well.

Furthermore, the system comprises a push button or switch 30 on the instrument panel or steering wheel to be operated by the driver D for switching the system between a "Peripheral-Vision Information On"-state and a "Foveal-Vision Information On"-state.

In this preferred embodiment of the system, the gaze position of the driver D is not detected and evaluated. This system is designed in such a way that the driver D can decide by operating the push button or switch 30 whether the information is presented or reproduced by one of the display devices 21, 22, 23 in a way so that it is adapted to be recognized by peripheral vision or by foveal vision.

The control device 10 is provided to control the display device(s) 21, 22, 23 such that in the "Foveal-Vision Information On"-state the information is presented or reproduced for the foveal vision of the driver and in the "Peripheral-Vision Information On"-state the information is presented or reproduced for the peripheral vision of the driver. To be recognizable by the driver, the size of the peripheral information presentation or reproduction has to be enlarged and possibly simplified in comparison to the foveal vision presentation or reproduction as explained above.

Preferably, the magnification and simplification for the peripheral information presentation/reproduction is predetermined and preset as fixed values either on the basis of eccentricity to the road center. For evaluating these values, the above equations (1) or (2) can be used or they are evaluated by try and error.

In the "Foveal-Vision Information On"-state the information is presented with a smaller size according to the enhanced visual acuity, e. g. by projecting the related image onto the windscreen in a location which is in the foveal vision area of the driver D.

Preferably, the driver D can additionally select which kind of information he wants to be presented either in his foveal vision and/or in his peripheral vision.

Furthermore, the peripheral presentation/reproduction of information can be provided either magnified (and possibly simplified) so that it is readable when directing the gaze onto the road, or in the usual manner i.e. without any magnification so that the driver can read it only when directing his gaze away from the road onto the related display.

Such selections can especially be made for reasons of a limited area to present information because the peripherally indicated information is presented in large size.

As an alternative, the selection can be made on the basis of the importance of the information. For example most relevant information like safety or collision warning is presented or reproduced in the foveal vision, less important information like navigation information is presented or reproduced peripherally and enlarged and simplified for recognizing in peripheral vision and all other information is presented or reproduced peripherally as well but in normal size for recognizing only when directing the gaze on it.

Another switch (not shown) can preferably be provided for selecting these types of information.

Examples of information-types that could be presented or reproduced are current speed, navigation information, text messages, or gear information. If the technological prerequisites (like especially transponders, camera based image processing for sign recognition, information rich digital maps which are based on GPS or other navigation systems) are provided, then traffic information can be presented to the driver in a readable peripheral vision format. Examples of such traffic information are current speed limit, traffic lights, the texts and images found on current road signs, information regarding upcoming hazards etc..

Finally, the preferred embodiment of the methods and systems according to the invention shall be summarized as follows:

Binary approach (foveal state or peripheral state) with a switch (for use with all display types) for the driver for switching peripheral state on/off. The displays have normal size in foveal state, and when the driver switches on the peripheral state, the displays show simplified, enlarged information. The displays do not change their state depending on gaze position (a driver can look directly at a display in the peripheral state) so that this embodiment works without an eye-tracker.

**Claims**

1.  Method for presenting or reproducing information in a viewing of a person by means of at least one display device, **characterized in that** the presentation or reproduction of the information by at least one display device can be selected by the person for recognition by foveal vision or by peripheral vision and
    wherein the presentation or reproduction of the information is adapted according to the selection with respect to its magnitude and/or size and/or contrast and/or intensity in dependency on whether the information is to be recognized by foveal vision or by peripheral vision of the person.

2.  Method according to claim 1,
    wherein predetermined types of information is presented or reproduced to be recognized by foveal vision and/or by peripheral vision of the person.

**3.** Method according to claim 2,
wherein safety related information is presented or reproduced to be recognized by foveal vision and/or by peripheral vision of the person.

**4.** Method according to claim 1,
wherein the person can select which kind of information he wants to be presented either in his foveal vision and/or in his peripheral vision.

**5.** System for presenting or reproducing information in a viewing of a person, especially for conducting a method according to claim 1, comprising:

- at least one display device (21, 22, 23),
- **characterized by** a push button or switch (30) to be operated by the person for switching the system between a "Peripheral-Vision Information On"-state and a "Foveal-Vision Information On"-state, and
- a control device (10) for controlling the at least one display device (21, 22, 23) according to the operation of the switch, for adapting the presentation or reproduction of the information with respect to its magnitude and/or size and/or contrast and/or intensity in dependency on whether the information is to be recognized by foveal vision or by peripheral vision of the person.

**6.** System according to claim 5,
wherein the dispay device is a projection display (21) or a screen (22) or a head-down or a head-up display (23) or a helmet-mounted-, a visor-mounted-, or an eyeglass-mounted display.

**7.** Computer program comprising computer program code means adapted to perform a method according to at least one of claims 1 to 4 when said program is run on a programmable microcomputer.

**8.** Computer program according to claim 7 adapted to be downloaded to a system according to claim 5 or one of its components when run on a computer which is connected to the internet.

**9.** Computer program product stored on a computer readable medium, comprising computer program code means according to claim 7.

**Patentansprüche**

**1.** Verfahren zum Darstellen oder Reproduzieren von Informationen in einem Blickfeld einer Person mittels mindestens einer Displayeinheit,
**dadurch gekennzeichnet, dass** die Darstellung oder Reproduktion der Informationen durch mindestens eine Displayeinheit durch die Person so gewählt werden kann, dass sie im fovealen Gesichtsfeld oder im peripheren Gesichtsfeld erkannt werden, wobei die Darstellung oder Reproduktion der Informationen entsprechend der Auswahl im Hinblick auf ihre Größe und/oder Abmessung und/oder Kontrast und/oder Intensität in Abhängigkeit davon angepasst wird, ob die Informationen im fovealen Gesichtsfeld oder im peripheren Gesichtsfeld der Person erkannt werden sollen.

**2.** Verfahren nach Anspruch 1,
bei dem vorbestimmte Arten von Informationen zur Erkennung im fovealen Gesichtsfeld und/oder im peripheren Gesichtsfeld der Person dargestellt oder reproduziert werden.

**3.** Verfahren nach Anspruch 2,
bei dem sicherheitsrelevante Informationen zur Erkennung im fovealen Gesichtsfeld und/oder im peripheren Gesichtsfeld der Person dargestellt oder reproduziert werden.

**4.** Verfahren nach Anspruch 1,
bei dem die Person wählen kann, welche Arten von Informationen sie in ihrem fovealen Gesichtsfeld und/oder in ihrem peripheren Gesichtsfeld dargestellt haben möchte.

**5.** System zur Darstellung oder Reproduktion von Informationen in einem Blickfeld einer Person, insbesondere zur Ausführung eines Verfahrens gemäß Anspruch 1, mit:

- mindestens einer Displayeinheit (21, 22, 23), **gekennzeichnet durch**:
- eine Taste oder einen Schalter (30), die/der **durch** die Person zum Umschalten des Systems zwischen einer Betriebsart "Periphere Gesichtsfeld-Information Ein" und einer Betriebsart "Foveale Gesichtsfeld-Information Ein" zu betätigen ist, und
- eine Steuereinrichtung (10) zum Steuern der mindestens einen Displayeinheit (21, 22, 23) gemäß der Betätigung des Schalters, zur Anpassung der Darstellung oder Reproduktion der Informationen im Hinblick auf ihre Größe und/oder Abmessung und/oder Kontrast und/oder Intensität in Abhängigkeit davon, ob die Informationen im fovealen Gesichtsfeld oder im peripheren Gesichtsfeld der Person erkannt werden sollen.

6. System nach Anspruch 5,
bei dem die Displayeinheit ein Projektionsdisplay (21) oder ein Bildschirm (22) oder ein Head-down- oder Head-up-Display (23) oder ein an einem Helm, einem Visier oder an einer Brille montiertes Display ist.

7. Computerprogramm mit Computerprogramm-Code-Mitteln, die zur Durchführung eines Verfahrens gemäß mindestens einem der Ansprüche 1 bis 4 ausgebildet sind, wenn das Programm mit einem programmierbaren Mikrocomputer ausgeführt wird.

8. Computerprogramm nach Anspruch 7, das zum Download in ein System gemäß Anspruch 5 oder eine seiner Komponenten ausgebildet ist, wenn es mit einem mit dem Internet verbundenen Computer ausgeführt wird.

9. Computerprogramm-Produkt, das auf einen Computer-lesbaren Medium gespeichert ist, mit Computerprogramm-Code-Mitteln gemäß Anspruch 7.

**Revendications**

1. Procédé de présentation ou de reproduction d'informations dans le champ de vision d'une personne au moyen d'au moins un dispositif d'affichage,
**caractérisé en ce que** la présentation ou la reproduction des informations par ledit au moins un dispositif d'affichage peut être sélectionnée par la personne pour une reconnaissance par la vision fovéale ou par la vision périphérique, et dans lequel la présentation ou la reproduction des informations est adaptée selon la sélection par rapport à leur grandeur et/ou à leur taille et/ou à leur contraste et/ou à leur intensité selon que les informations doivent être reconnues par la vision fovéale ou par la vision périphérique de la personne.

2. Procédé selon la revendication 1,
dans lequel des types prédéterminés d'informations sont présentés ou reproduits pour être reconnus par la vision fovéale et/ou par la vision périphérique de la personne.

3. Procédé selon la revendication 2,
dans lequel des informations relatives à la sécurité sont présentées ou reproduites pour être reconnues par la vision fovéale et/ou par la vision périphérique de la personne.

4. Procédé selon la revendication 1,
dans lequel la personne peut sélectionner le type d'informations qu'elle souhaite voir présenté dans sa vision fovéale et/ou dans sa vision périphérique.

5. Système de présentation ou de reproduction d'informations dans le champ de vision d'une personne, en particulier pour exécuter un procédé selon la revendication 1, comprenant:

- au moins un dispositif d'affichage (21, 22, 23);
- **caractérisé par** un bouton poussoir ou un commutateur (30) à actionner par la personne pour commuter le système entre un état "informations pour vision périphérique actif" et un état "informations pour vision fovéale actif"; et
- un dispositif de commande (10) pour commander ledit au moins un dispositif d'affichage (21, 22, 23) selon l'actionnement du commutateur, pour adapter la présentation ou la reproduction des informations par rapport à leur grandeur et/ou à leur taille et/ou à leur contraste et/ou à leur intensité selon que les informations doivent être reconnues par la vision fovéale ou par la vision périphérique de la personne.

**6.** Système selon la revendication 5,
dans lequel le dispositif d'affichage est un affichage par projection (21) ou un écran (22) ou un affichage tête basse ou tête haute (23) ou un affichage monté sur un casque, monté sur un viseur ou monté sur des lunettes.

**7.** Programme d'ordinateur comprenant des moyens de code de programme d'ordinateur adaptés pour réaliser un procédé selon au moins une des revendications 1 à 4 lorsque ledit programme est exécuté sur un micro-ordinateur programmable.

**8.** Programme d'ordinateur selon la revendication 7 adapté pour être téléchargé sur un système selon la revendication 5 ou l'un de ses composants lorsqu'il est exécuté sur un ordinateur connecté à l'Internet.

**9.** Produit de programme d'ordinateur stocké sur un support lisible par un ordinateur, comprenant des moyens de code de programme d'ordinateur selon la revendication 7.

FIG. 1
(Prior Art)

FIG. 2
(Prior Art)

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 02015717

- JP 7280592 A